# EUROPEAN PATENT APPLICATION

(11) **EP 2 068 277 A1**
(43) Date of publication of application: **10.06.2009**
(21) Application number: 08161259.0
(22) Date of filing: 28.07.2008
(51) Int. Cl.: G06Q 30/00

(54) **Multivariate multiple matrix analysis of analytical and sensory data**

(30) Priority: 22.08.2007 US 843435
(71) Applicant: MKS Instruments, Inc., Andover, MA 01810 (US)
(72) Inventor: Kettaneh, Nouna, Campton, NH 03223 (US); Wold, Svante Bjarne, Hollis, NH 03049 (US)
(74) Representative: Viering, Jentschura & Partner

(57) **Abstract**

A system and method is provided for predicting consumer behavior for selected products. The method includes providing a first matrix associated with N products evaluated by a plurality of consumers, providing a second matrix associated with the N products characterized by at least one of an analytical profile or an evaluation by a plurality of experts and correlating the first matrix to the second or/and the third matrix to produce a relationship model.

## Description

### BACKGROUND

Consumer decision-making has been a focus for many years. Companies that are attempting to meet a particular need in the marketplace, or that are attempting to find out how products or services are being received by the consumer, will often conduct market research to attempt to quantify attributes or characteristics of a particular consumer segment. If performed well, the consumer data extracted from this research can inform companies about how their and others' products or services are perceived and bought by purchasers or potential purchasers in the marketplace, and how the companies' products or services can be changed to achieve the companies' business goals.

Traditionally, this information is collected by introducing products and/or services to a test panel, focus group or another set of actual consumers and query whether they like the product and would be interested in purchasing or using the product or service. Such consumer interest/liking surveys are intended to give marketers a better idea about whether consumers would actually buy or like the products and/or services, how often (or likelihood of repeat purchases) and how many units or what size they would purchase, how much they would pay, etc. In addition, such surveys can also be used to determine interest in advertising and preferences for certain ingredients in foods or beverages, in packaging types, such as paperboard, plastic, etc.

While consumer data can be very useful, the data can often give inaccurate expectations and predictions about the probably success of the product or service, thereby creating potentially skewed results compared with actual sales. Such a situation can be embarrassing for a manufacturer and agency that conducted the surveys if expected/predicted purchasing levels as suggested by the manufacturer and agency are not attained.

This inaccuracy may be due to test panel participants or subjects providing feedback that does not match their actual liking or purchasing habits. While a few consumers in a survey may intentionally supply incorrect answers because they want to be invited back for other surveys or test product sampling, most participants generally try to be as accurate as possible, but their answers may not exactly correspond to their actual behavior. This change in circumstances may be due to a number of different reasons. One such reason is that test panelists sometimes don't understand the survey questions or may find the questions to be confusing or misleading. For example, in the food context, panelists might confuse the terms "refrigerated" and "frozen," and give a survey response, which assumes an inaccurate product characteristic. Another reason for inaccuracy may be that the panelist is flattered that someone is asking for their opinion, and consequently is overly polite to the interviewer and indicates interest in the product even though the consumer wouldn't have enough interest in the actual product to seek it out and pay hard-earned money to buy it. Still other reasons may include errors in inputting or compiling survey responses and other factors. All of the foregoing can lead to inaccurate or skewed data when trying to interpret whether to continue supporting a product or service offering.

### SUMMARY

Much work has been tried in the past to make marketing survey results more accurate. Accordingly, what is needed is a technique for somehow taking inaccuracies of conventional consumer preference assessments into account while nevertheless providing a more accurate assessment or predictor of consumer interest in products and services.

A method is provided for predicting consumer behavior in selected products. The method includes providing a first matrix associated with N products evaluated by a plurality of consumers in terms of several different responses, providing a second matrix associated with the N products characterized by at least one of an analytical profile or an evaluation by a plurality of experts, and correlating the first matrix to the second matrix to produce a relationship model. In one embodiment, the first matrix is compressed to a dimensionality comparable to the dimensionality of the second matrix by computing average values for each product and consumer response variable, either over all consumers, or separately for likers and non-likers.

In one embodiment, the method can further include displaying a score plot of the relationship model. The score plot can include a diagnostic of the strength of association and correlation between the first matrix and the second matrix.

In another embodiment, the method can further include predicting consumer responses for new products using the relationship model. The predicted responses can be displayed with a level of confidence. A measure of reliability of the predictions for new products can be displayed as characterized by the second matrix.

In another embodiment, the method can further include building a third matrix associated with the N products characterized by either an analytical profile or an evaluated by an expert sensory panel not chosen in the building the second matrix and relating the first matrix to the third matrix to produce a relationship model. The method can further include relating any two matrices to each other.

In another embodiment, each matrix can be preprocessed by at least one preprocessing element to transform the data into a suitable form for analysis. The preprocessing elements can include scaling of data, mean-centering, transformation and expansion, advanced scaling, and data correction and compression. In one embodiment, the building the first matrix can include analyzing the preprocessed data using cross-validation to determine a number of significant components, inspecting the data for outliers, and removing the outliers from the data. The data can be displayed as scores to show indications of groups, trends, and outliers. In another embodiment, the building of the first relationship model can include analyzing the preprocessed data to determine a liking/non-liking model, cross-validating the liking/non-liking model to determine the number of significant components, and dividing liking/non-liking model into liker data and non-liker data based on the number of significant components. Further, an average value can be computed for each product and liker and non-liker consumer response variable.

A system is provided for predicting consumer behavior in selected products, including a first matrix module for providing a first matrix associated with N products evaluated by a plurality of consumers in terms of several responses, a second matrix module for providing a second matrix associated with the N products characterized by at least one of an analytical profile or an evaluation by a plurality of experts, and a correlation module for correlating the first matrix to the second matrix to produce a relationship model. The system can further include a display module for displaying a score plot of the relationship model. The score plot can include a diagnostic of the strength of association and correlation between the first matrix and the second matrix.

In another embodiment, the system can include a prediction module for predicting consumer responses for new products using the relationship model. The system can also include a display module for displaying the predicted responses with a level of confidence and/or a display module for displaying a measure of reliability of the predictors for the new products as characterized by the second matrix.

In another embodiment, the system can include a third matrix module for building a third matrix associated with the N products characterized by either an analytical profile or an evaluated by an expert sensory panel not chosen in the building the second matrix, and a relationship module for relating the first matrix to the third matrix to produce a relationship model. The system can relate any two matrices to each other.

In another embodiment, each matrix can be preprocessed by at least one preprocessing element to transform the data into a suitable form for analysis. The preprocessing elements can include scaling of data, mean-centering, transformation and expansion, advanced scaling, and data correction and compression.

In one embodiment, the system can include an analysis module for analyzing the preprocessed data of any matrix or pair of matrices using cross-validation to determine a number of significant components of the data, an inspection module for inspecting the number of significant components of the data for outliers, and an outlier module for removing the outliers from the data. The system can include a display module for displaying the data or scores to show indications of groups, trends, and outliers.

In one embodiment, building the first matrix includes analyzing the preprocessed data to determine a liking/non-liking model, cross-validating the liking/non-liking model to determine a number of significant components, and dividing liking/non-liking model into liker data and non-liker data based on the significant components. The dividing module further includes computing an average value for each product consumer response variable, either for all consumers testing the product, or separately for likers and non-likers.

A method of predicting consumer behavior in selected products, includes means for providing a first matrix associated with N products evaluated by a plurality of consumers, means for providing a second matrix associated with the N products characterized by at least one of an analytical profile or an evaluation by a plurality of experts, and means for correlating the first matrix to the second matrix to produce a relationship model.

A computer readable medium having prediction software stored thereon that when executed on a computing device correlates matrix data to produce a predicted relationship model, includes correlating a first matrix to a second matrix to produce a relationship model, and displaying a score plot of the relationship model.

The method and system provide the advantages of predicting consumer responses without the need for additional consumer input.

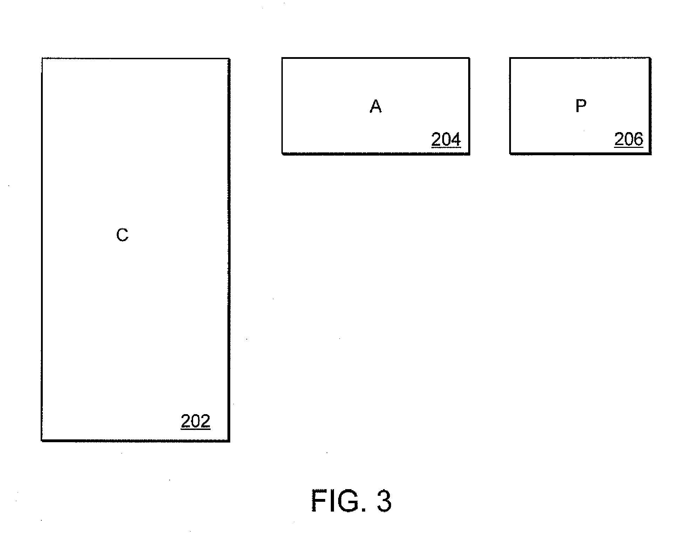

The basic objectives are (a) to understand the consumer responses and liking of the products as well as a comparison between the products with respect to the consumer data, and (b) to find the relationships between on the one hand the data matrices A and P, and on the other hand C (FIG. 3). Finding such relationships will allow the prediction of consumer behavior from either analytical or expert panel data or both. This, in turn, will provide an understanding of the nature of consumer behavior in terms of physical, chemical, and other factors, and thus allow the modification of the product candidates to improve consumer liking.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.
FIG. 1 shows a system 100 for predicting consumer responses for N products and candidates;
FIG. 2A shows a block diagram of a PCA module;
FIG. 2B shows a block diagram of a PLS module;
FIG. 3 is a block diagram representing an analytical data matrix (A), an expert data matrix (P), and a consumer data matrix (C) based on the evaluation of N products and candidates;
FIG. 4A shows an example of a score plot of consumer data separated by products tested;
FIG. 4B shows an example of the score plot of FIG. 4A with outliers removed;
FIG. 4C shows an example of a relationship model loading plot showing the correlation between consumer data and analytical data and/or expert data;
FIG. 4D shows an example of a bar graph showing the distances to the model of the 13 products being the basis for FIG. 4C;
FIG. 4E shows another example of a score plot graphically highlighting the correlation between consumer data product averages and analytical data and/or expert data;
FIG. 5 shows an example of a consumer liking graph for 13 products;
FIG. 6A shows an example of a resulting score plot;
FIG. 6B shows an example of a loading plot; and
FIG. 7 shows an example of a super model showing the correlation between all of the block models.

### DETAILED DESCRIPTION

Generally, a system predicts consumer responses for N products and candidates as follows. At least two matrices are produced for the N products or candidates, one matrix based on consumer evaluation and the other matrix based on analytical profile characterization or expert panel evaluation. A third matrix can be produced based on analytical profile characterization or expert panel evaluation not used for building the other matrix. A relationship model is built by correlating the product candidate data evaluated by consumers with the same product candidate data evaluated or analyzed by an expert panel and/or an analytical profile. The relationship model is used to build a prediction model of consumer behavior from either analytical or expert panel data or both. The prediction model provides an understanding of the nature of consumer behavior in terms of physical, chemical, and other factors, and thus allows the modification of the product candidates to improve consumer liking.

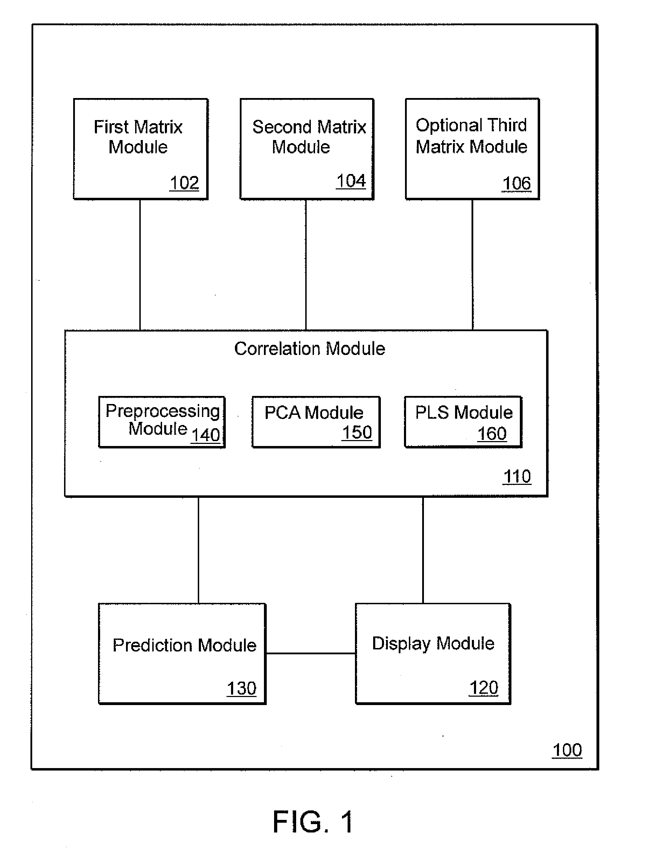

FIG. 1 shows the system 100 for predicting consumer responses for N products and candidates. The system 100 includes a first matrix module 102, a second matrix module 104, an optional third matrix module 106, a correlation module 110, a display module 120, and a prediction module 130. The correlation module 110 includes a preprocessing module 140, a principal components analysis (PCA) module 150 and/or a partial least squares (PLS) analysis module 160. Further details of PCA and PLS analysis can be found in "Multi- and Megavariate Data Analysis, Part I, Basic Principles and Applications", Eriksson et al, Umetrics Academy, January 2006 and "Multi- and Megavariate Data Analysis, Part II, Advanced Applications and Method Extensions", Eriksson et al, Umetrics Academy, March 2006 the entirety of which are herein incorporated by reference.

Each matrix module (102, 104, 106) produces respective matrices each being based on N observations and K variables from a set of products that is evaluated by a group of consumers, and characterized by an analytical profile and/or a descriptive profile from a panel of experts. Note that the number of rows in C often exceeds the number of products N, since several consumers evaluate each product. Analogously, several experts evaluating each product, and each product sample may be subjected to the analytical instrument several times, and hence the number of rows in 204 and 206 may initially exceed N before a preprocessing by averaging reduces these numbers of rows to N (the number of products).

The correlation module 110 correlates at least two matrices to produce a relationship model that represents the relationship between the at least two matrices using PLS analysis. In some embodiments, before the matrices can be correlated they are transformed by the preprocessing module 140 and the PCA module 150 or the PLS module 160 into a suitable form for analysis using preprocessing elements. The preprocessing elements can include scaling of data, mean-centering, transformation and expansion, advanced scaling, and data correction and compression.

The display module 120 displays graphical results of the relationship model on a display device. The displayed results assist a user in narrowing the data set to produce a more detailed model. It should be understood that display device can be any type of display device known, such as a liquid crystal display (LCD), a cathode ray tube (CRT) or the like.

The prediction module 130 utilizes the relationship model to predict responses of other products and product candidates without the need for these to be evaluated by the group of consumers, but only by the analytical profile and/or the panel of experts.

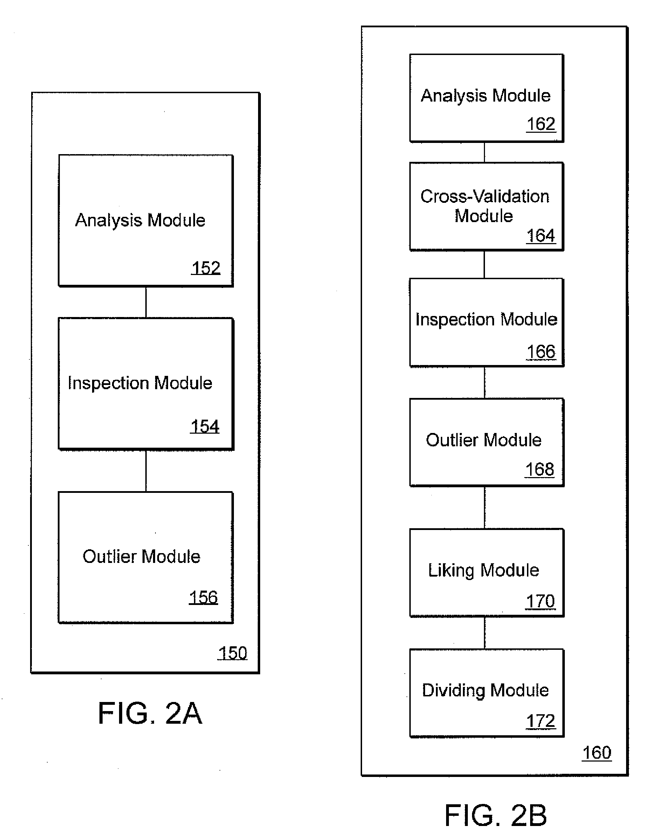

FIG. 2A shows a block diagram of the PCA module 150 of FIG. 2. The PCA module includes an analysis module 152, an inspection module 154, and an outlier module 156. The analysis module 152 uses cross-validation (CV) to determine the number of significant components. The inspection module 154 displays the results of the analysis module 152 to a user through the display module 120. The results show indications of groups (clusters), trends, outliers, and other expected or unexpected regularities. The outlier module 156 allows the user inspect the results and remove the outliers to produce a cleaner data set for PCA or PLS analysis.

FIG. 2B shows a block diagram of the PLS module 160 of FIG. 2. The PLS module includes an analysis module 162, a cross-validation module 164, an inspection module 166, an outlier module 168, a liking module 170, and a dividing module 172. The analysis module 162 produces a model of the relationship of all X-variables of one matrix related to one of the other matrices (with Y-variables) resulting in a relationship model that shows which Y-variables are related to which X-variables, the strength of the associations, and the correlations between the X's and Y's. The cross-validation module 164 uses cross-validation (CV) to determine the number of significant components in the 162 model. The inspection module 166 displays the results of the analysis module 162 to a user through the display module 120. The results show indications of groups (clusters), trends, outliers, and other expected or unexpected regularities. The outlier module 168 allows the user inspect the results and remove the outliers to produce cleaner data for further PLS analysis. The liking module 170 produces a PLS model of all X-variables related to an overall liking Y. The dividing module 172 divides the data into a liking group and a non-liking group and computes the averages of each consumer response variable for each product, either separately for the likers and the non-likers, or for all consumes, thus giving one of two matrices with compressed consumer data with N rows, i.e., one row per product.

FIG. 3 shows three matrices (202, 204, 206) produced from respective matrix modules (102, 104, 106). The first matrix 202 is a consumer matrix C, the second matrix 204 is an analytical data matrix A, and the third matrix 206 is an expert panel data matrix P.

The consumer matrix 202 represents the evaluation of each of the N products and candidates by a panel of consumers based on a set of KC criteria to build the matrix 202 with KC variables. The KC criteria can include an overall liking of each N products and candidates by each consumer, initially, after some time, e.g., 30 seconds, after some additional time, e.g., 2 minutes, etc., and specific likings or dislikings such as sourness, metallic taste, sweetness, juiciness, hardness...initially, after, e.g., 30 seconds, after e.g., 2 minutes, etc.

In some embodiments, each consumer may only evaluate a fraction of the products and candidates, i.e., 1/2 or 1/3 of the candidates, where the selection of the products and candidates evaluated by each consumer can be done according to an incomplete block design or similar.

The analytical data matrix 204 represents the characterization each of the N products and candidates by analytical profiles to build the matrix 204 with KA variables. Examples of analytical profiles include gas or liquid chromatography (LC) and/or mass spectroscopy (MS), other spectroscopies (NMR, IR, NIR, Raman, or other) and combinations thereof, e.g., LC-MS.

The expert panel data matrix 206 represents the evaluation of each of the N products and candidates evaluated by an expert sensory panel to build the matrix 206 with KP attributes. Examples of attributes include for example toughness, color, acidity taste, bitterness and metallic taste taken at periodic time periods, i.e., after 0, 30, 60, and 300 seconds, etc. In some embodiments, the expert sensory panel evaluation is made in duplicate or triplicate, which then is averaged to expert panel data matrix 206 to have one matrix row per product.

The correlation module 110 correlates the compressed consumer matrix 202 with at least one of the analytical data matrix 204 and the expert panel data matrix 206 to produce the relationship model. In some embodiments, the correlation module 110 can correlate any two matrices. However, a complex correlation analysis is needed because each matrix is typically different in size. For example, the analytical data matrix 204 and the expert panel data matrix 206 usually have N rows (averaging over several experts or/and several analyses may be needed as a preprocessing), one for each product, while the consumer matrix 202 usually has a different and larger number of rows, one for each responding consumer with respect to one product; the number of columns in the matrices is usually different; and in some instances the analytical matrix 204 is absent or incomplete and difficult to employ in further data analysis.

In some embodiments, the preprocessing module 140 is used to transform the data in each matrix (202,204,206) into a suitable form for analysis using preprocessing elements, such as scaling of data, mean-centering, transformation and expansion, advanced scaling, and data correction and compression.

In some embodiments, the PCA module 150 and/or the PLS module 160 is used on the preprocessed consumer matrix 202 to (1) understand the consumer likings of the products and candidates, and (2) to "compress" the number of rows NC to N to make it possible to relate the compressed consumer matrix 202 to the analytical data matrix 204 and/or the expert panel data matrix 206.

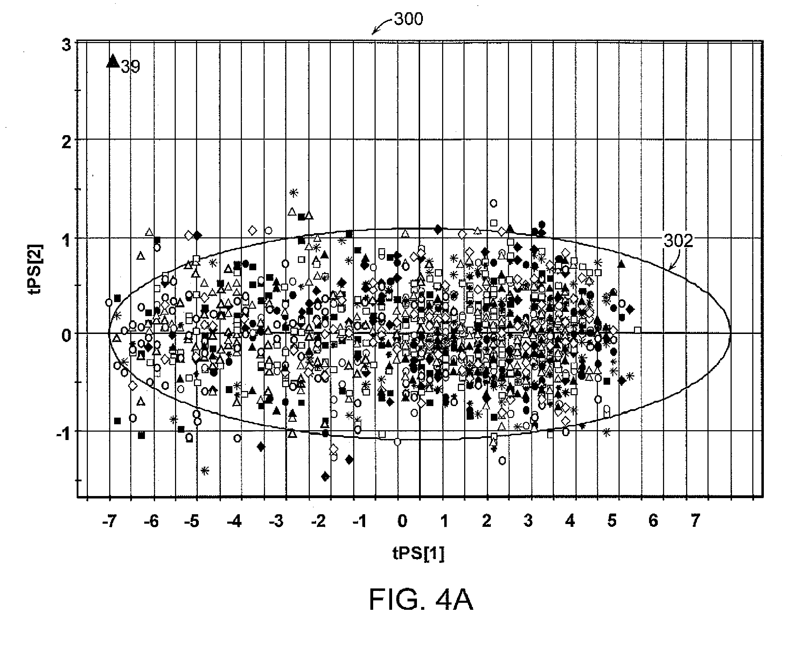

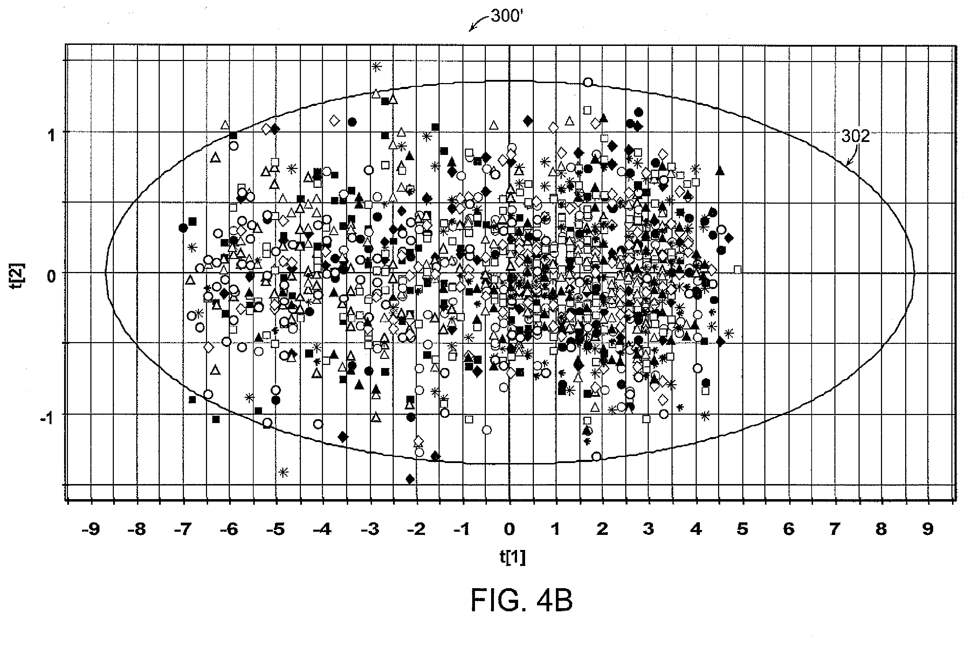

FIGS. 4A-4E provide an illustrative example of a first PCA/PLS analysis of the preprocessed but still uncompressed consumer matrix 202 (FIG. 3), and thereafter a second PLS analysis correlating the compressed consumer matrix 202 (from the first analysis) and the expert panel data matrix 206 (FIG. 3). After the first analysis of 202 by module 162 (FIG. 2B) using overall liking as y, and cross-validation (CV) to determine the number of significant components, the inspection module displays the results to a user as a PLS score plot 300 as shown in FIG. 4A. The score plot 300 shows indications of groups (clusters), trends, outliers, and other expected or unexpected regularities. To produce a better model, the user inspects the score plot 300 and removes the outliers though the outlier module 168 (FIG. 2B) using an interface such as a computer mouse. For example, as shown in FIG. 4A, observation 39 is a very strong outlier and should be removed. In some embodiments, the PLS score plot 300 can include a confidence ellipse 302 to aide the user in removing the outliers from the PCA/PLS model. Indeed, observation 39 falls far outside the tolerance ellipse 302 and should be removed by the user. Note that points barely outside the ellipse 302 are not significant outliers. After the outlier(s) have been removed, the PLS model is refitted automatically to the pruned data as shown in the score plot 300' of FIG. 4B. Cross-validation in the PLS module 160 is used to determine the number of significant components resulting in a model relating the PLS-optimal combination of all X-variables to the overall liking y.

The resulting model is first used to compress the consumer data from NC rows (one per consumer and product evaluation) to N rows (one per product) by means of averages over the consumers for each of the N products and for each consumer response. Sometimes this compression is made separately for likers and non-likers as seen in the scores of the first PLS model. The liking module 170 (FIG. 2B) is then used to divide the consumers into "likers" and "non-likers" using the first X-score, t1 (horizontal coordinate in figure 4B), as criterion for this segmentation.

In some embodiments, a band of "indifferent" consumers with "t" between -0.5 and 0.5 can be excluded from further analysis to make a more distinct separation of likes from non-likers. It should be understood that the bandwidth can be customized by the user.

The dividing module 172 (FIG. 2B) computes the average values of each consumer response variable and product, separately for the likers and non-likers to provide a consumer-liker data matrix and a consumer-non-liker data matrix. These two matrices each have N rows, one per product or candidate thereby enabling the consumer data to be correlated with the analytical data matrix 204 (FIG. 3) and/or the expert panel data matrix 206 (FIG. 3).

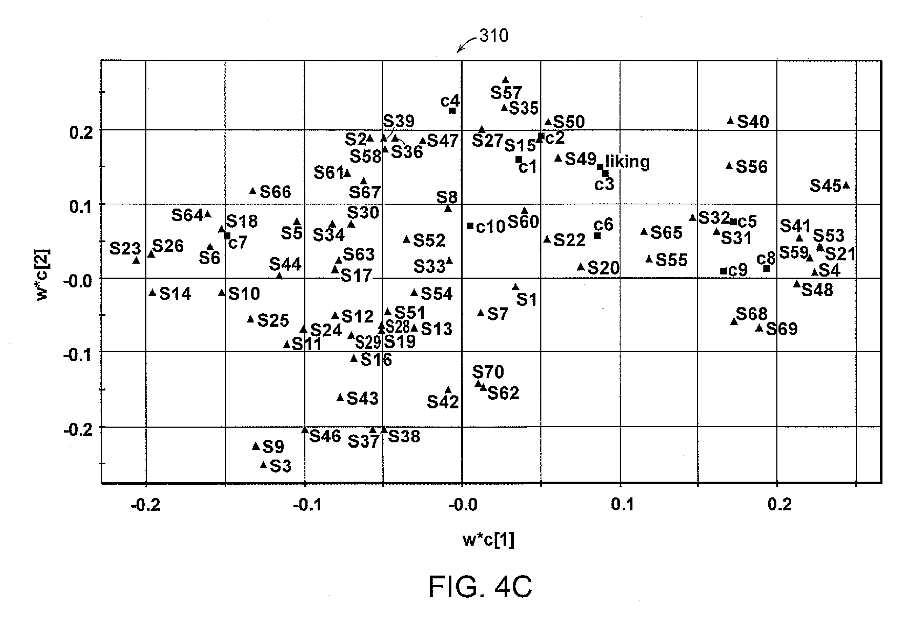

The compressed matrix of liker-data is then correlated with the analytical data matrix 204 (FIG. 3) and/or the expert panel data matrix 206 (FIG. 3) to produce the relationship model and displayed as a relationship model plot 310 shown in FIG. 4C. In some embodiments, another separate PLS analysis is done of the compressed non-liker data matrix in relation to the expert panel data matrix 206 or the analytical data matrix 204. The resulting relationship model shows which Y-variables (consumer scales, C) are related to which X-variables (A and/or P variables), the strength of the associations, and the correlation between the X's and between the Y's.

The analysis module 162 (FIG. 2B) correlates one of consumer-liker data matrix or the consumer-non-liker data matrix with the analytical data matrix 204 (FIG. 3) and/or the expert panel data matrix 206 (FIG. 3) using the consumer matrix as the Y-matrix or response matrix, and the analytical and/or expert panel matrices as the X matrix or predictor matrix.

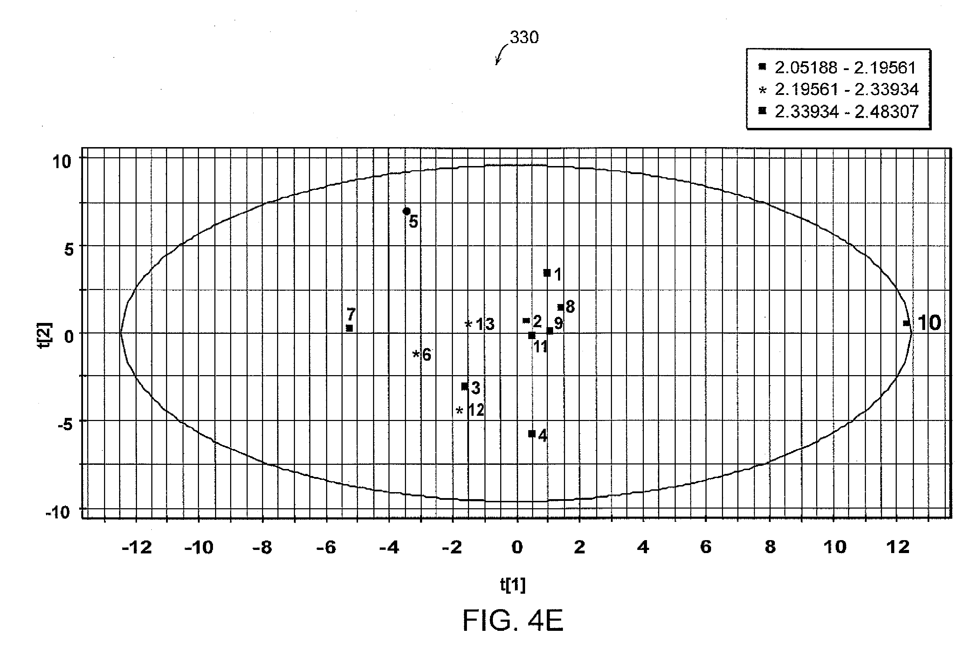

As shown in FIG. 4C, the resulting relationship model plot 310 shows which Y-variables (liking and c=consumer scales) are related to which X-variables (S = A and/or P variables), the strength of the associations, and the correlation between the X's and between the Y's. In some embodiments, the score plots (scores = summaries of X) can be colored or shaded by any Y-variable to get a visual display of the relationships as shown in the score plot 330 of FIG. 4E.

In some embodiments, if the number of variables is large, typically larger than 50, the PCA and PLS analyses may be done hierarchically by dividing the variables into blocks, analyzing each block separately, and then using the resulting block-scores from all the block models as new variables in a second PCA or PLS model. The loadings and other coefficients of the second PCA or PLS model give information about the importance of, and the correlation between, the blocks. A drill-down into each block model is made for important blocks (with large coefficients in the second model) to see which individual variables are important (having large coefficients in the respective block model) and how they are correlated.

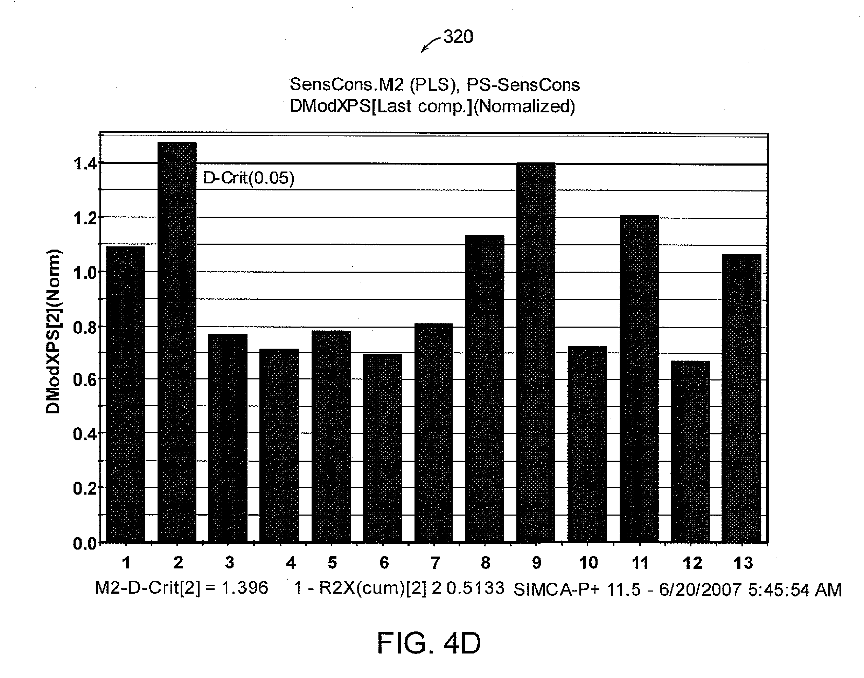

The PLS module 160 estimates the relationship between two matrices X and Y, which can be used in 130 to predict Y-values for new samples of products or product candidates. Also, a reliability measure of the X-data for each sample is given (both "training set" and prediction samples), i.e., a distance to the model plot 320 as shown in FIG. 4D. The predicted values are given with confidence bands around them as indications of their precision and reliability. These predictions are achieved by plugging the X-values of the new samples into the PLS model, which uses the model coefficients to calculate the predicted Y-values for each new sample.

In some embodiments, the score plot 300 as shown in FIGS. 4A-4B can be colored or shaded by degree of liking and other variables of interest. Thus, along with corresponding plots of loadings, PLS-regression coefficients, VIP, and other model parameters, a visual interpretation of the result can be made by the user. For example, a first score, t1, provides a "liking scale" that is useful for understanding the consumer preferences of the products; while the loadings provide information which variables (consumer scales) contribute to the liking scale and in which direction, etc.

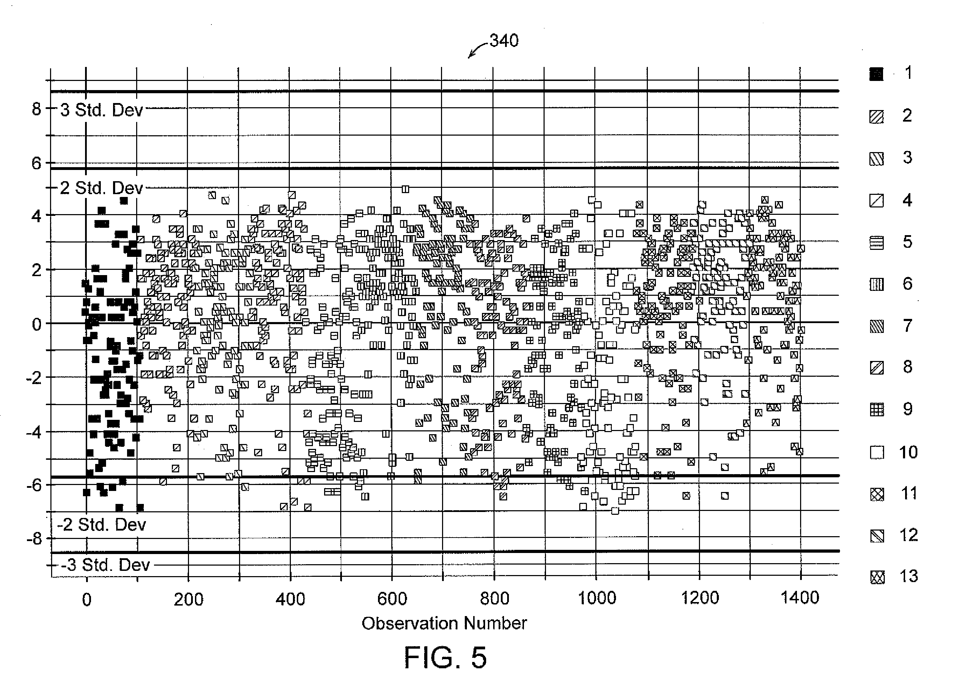

In some embodiments, a PLS analysis can be used to produce a product liking profile by transforming the consumer data matrix 202 (FIG. 2B) to a three-way array (product x, consumer z, consumer scale y). The three-way array is analyzed using a 3-way analysis to provide a graphical comparison of each product's distribution of consumer likings as shown in the consumer liking graph 340 of FIG. 5. An example for 3-way analysis can be found in "Modeling and diagnostics of batch processes and analogous kinetic experiments", Wold et al, Chemometrics and Intelligent Laboratory Systems 44 (1-2, 1998) 331-340, the entirety of which is herein incorporated by reference.

In some embodiments, the plot can show a distribution of consumer liking (score t1) for each product; the plot can be colored or shaded by product to indicate which product has strong likers; the plot can show which product has few/many weak likers or non-likers; etc.

In some embodiments where the consumer analyzed only part of the products, such as 1/2 or 1/3, a special PCA analysis of the folded out data matrix including "holes" can be done to get estimates of the values of the "holes" (the matrix elements with no value). Thereafter, the matrix with the "holes" can be filled in and analyzed by the special 3-way analysis as described above, resulting in scores plotted with different colors or shades for different products.

In another embodiment, a second plot can show the loadings of the consumer scales displaying which scales contribute strongly to the product profiles and which scales contribute weakly or not at all.

In some embodiments, it may be useful to understand the differences between known groups or classes of products and candidates in either the analytical, panel, or consumer data. The user can apply a PLS-discriminant analysis (PLS-DA) to the consumer matrix 202 (FIG. 3), the analytical data matrix 204 (FIG. 3) and/or the expert panel data matrix 206 (FIG. 3). As described above, the consumer data must be compressed to a consumer-liker data matrix and a consumer-non-liker data matrix before it can be combined with the analytical data matrix 204 and/or the expert panel data matrix 206. In some embodiments, the outliers are found and deleted as described in the PCA analysis procedure above.

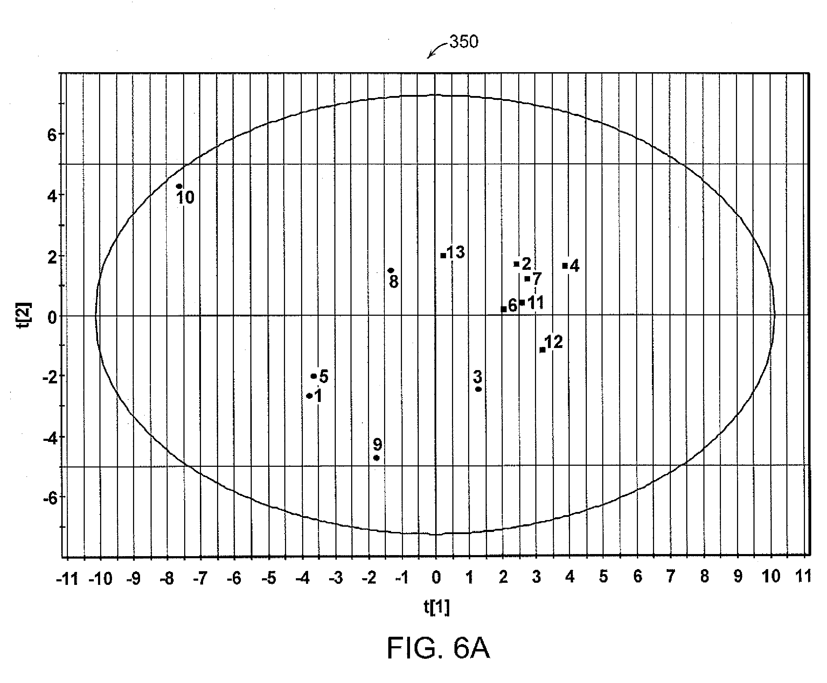

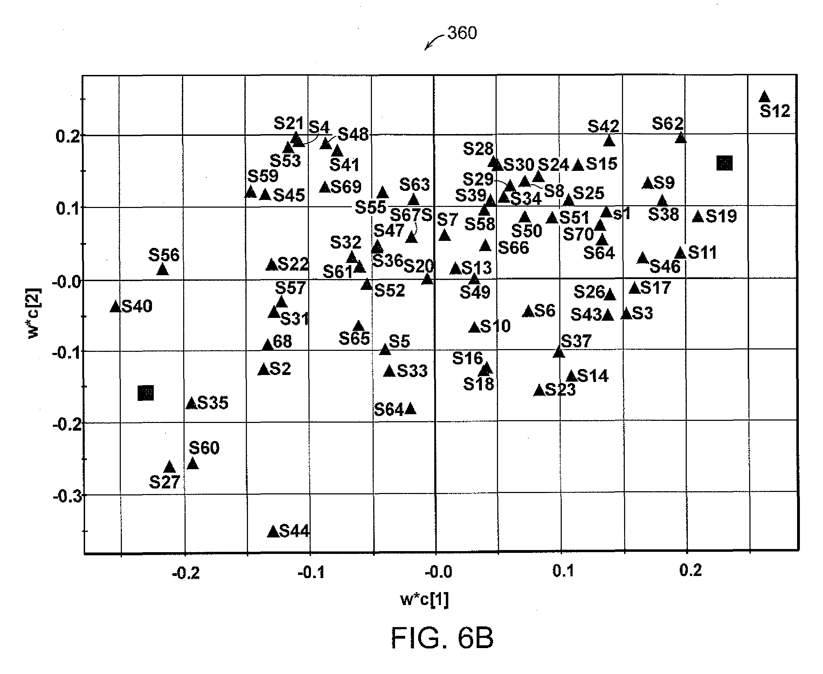

As shown in FIGS. 6A and B, a resulting score plot 350 (FIG. 6A) and a loading plot 360 (FIG. 6B) provide a means of interpreting the group or class differences, i.e., classes that are well resolved (seen in score plot(s); classes that are not resolved (seen in same score plots); classes that are border-line cases (seen in same score plots).

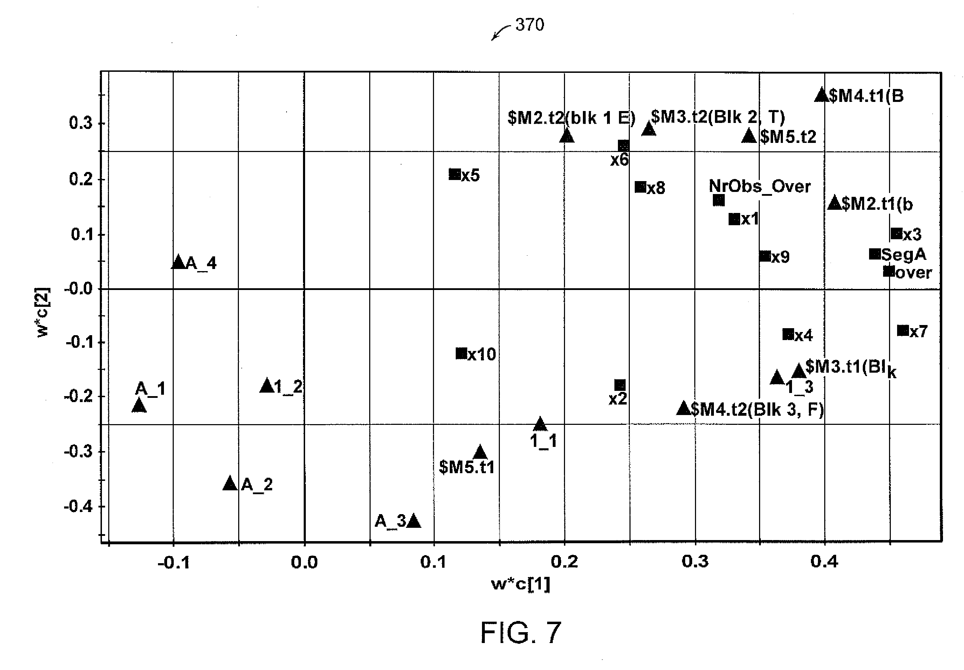

In some embodiments, if the number of variables is large, typically larger than 50, the PLS-discriminant analysis can be done hierarchically by dividing the variables into blocks and analyzing each block separately, and then using the resulting block-scores from all block models as new variables in a second "super model" as shown in the super model plot 370 of FIG. 7. The loadings and other coefficients of the super model give information about the importance of, and the correlation between, the blocks. A drill-down into each block model is then made for important blocks to see which individual variables are important and how they are correlated. An example of a drill-down approach can be found in "Hierarchical multi-block PLS and PC models, for easier interpretation, and as an alternative to variable selection", Wold et al, J. Chemometrics 10 (1996) 463-482 the entirety of which is herein incorporated by reference.

The above-described systems and methods can be implemented in digital electronic circuitry, in computer hardware, firmware, and/or software. The implementation can be as a computer program product (i.e., a computer program tangibly embodied in an information carrier). The implementation can, for example, be in a machine-readable storage device and/or in a propagated signal, for execution by, or to control the operation of, data processing apparatus. The implementation can, for example, be a programmable processor, a computer, and/or multiple computers.

A computer program can be written in any form of programming language, including compiled and/or interpreted languages, and the computer program can be deployed in any form, including as a stand-alone program or as a subroutine, element, and/or other unit suitable for use in a computing environment. A computer program can be deployed to be executed on one computer or on multiple computers at one site.

Method steps can be performed by one or more programmable processors executing a computer program to perform functions of the invention by operating on input data and generating output. Method steps can also be performed by and an apparatus can be implemented as special purpose logic circuitry. The circuitry can, for example, be a FPGA (field programmable gate array) and/or an ASIC (application-specific integrated circuit). Modules, subroutines, and software agents can refer to portions of the computer program, the processor, the special circuitry, software, and/or hardware that implement that functionality.

Processors suitable for the execution of a computer program include, by way of example, both general and special purpose microprocessors, and any one or more processors of any kind of digital computer. Generally, a processor receives instructions and data from a read-only memory or a random access memory or both. The essential elements of a computer are a processor for executing instructions and one or more memory devices for storing instructions and data. Generally, a computer can include, can be operatively coupled to receive data from and/or transfer data to one or more mass storage devices for storing data (e.g., magnetic, magneto-optical disks, or optical disks).

To provide for interaction with a user, the above described techniques can be implemented on a computer having a display device. The display device can, for example, be a cathode ray tube (CRT) and/or a liquid crystal display (LCD) monitor. The interaction with a user can, for example, be a display of information to the user and a keyboard and a pointing device (e.g., a mouse or a trackball) by which the user can provide input to the computer (e.g., interact with a user interface element). Other kinds of devices can be used to provide for interaction with a user. Other devices can, for example, be feedback provided to the user in any form of sensory feedback (e.g., visual feedback, auditory feedback, or tactile feedback). Input from the user can, for example, be received in any form, including acoustic, speech, and/or tactile input.

The above described techniques can be implemented in a distributed computing system that includes a back-end component. The back-end component can, for example, be a data server, a middleware component, and/or an application server. The above described techniques can be implemented in a distributing computing system that includes a front-end component. The front-end component can, for example, be a client computer having a graphical user interface, a Web browser through which a user can interact with an example implementation, and/or other graphical user interfaces for a transmitting device. The components of the system can be interconnected by any form or medium of digital data communication (e.g., a communication network). Examples of communication networks include a local area network (LAN), a wide area network (WAN), the Internet, wired networks, and/or wireless networks.

The system can include clients and servers. A client and a server are generally remote from each other and typically interact through a communication network. The relationship of client and server arises by virtue of computer programs running on the respective computers and having a client-server relationship to each other.

While this invention has been particularly shown and described with references to preferred embodiments thereof, it will be understood by those skilled in the art that various changes in form and details may be made therein without departing from the scope of the invention encompassed by the appended claims.

## Claims

1. A method of predicting consumer behavior in selected products, comprising:
providing a first matrix associated with N products evaluated by a plurality of consumers;
providing a second matrix associated with the N products **characterized by** at least one of an analytical profile or an evaluation by a plurality of experts; and
correlating the first matrix to the second matrix to produce a relationship model.

2. The method of Claim 1, further comprising compressing the first and second matrix to the same dimensionality.

3. The method of Claim 1, further comprising displaying a score plot of the relationship model.

4. The method of Claim 3, wherein the score plot includes a strength of association and correlation between the first matrix and the second matrix.

5. The method of Claim 1, further comprising predicting consumer responses for new products using the relationship model.

6. The method of Claim 5, further comprising displaying the predicted response values with levels of confidence.

7. The method of Claim 5, further comprising displaying a measure of reliability of the new products data as **characterized by** the second matrix.

8. The method of Claim 1, further comprising:
provide a third matrix associated with the N products **characterized by** either an analytical profile or an evaluated by an expert sensory panel not chosen in the building the second matrix; and
correlating the first matrix to the third matrix to produce a relationship model.

9. The method of Claim 8, further comprising correlating any two matrices to each other.

10. The method of Claim 1, wherein each matrix is preprocessed by at least one preprocessing element to transform the data into a suitable form for analysis.

11. The method of Claim 10, wherein preprocessing elements include scaling of data, mean-centering, transformation and expansion, advanced scaling, and data correction and compression.

12. The method of Claim 10, wherein building the first matrix includes:
analyzing the preprocessed data using cross-validation to determine a number of significant components;
inspecting the resulting model for outliers; and
removing the outliers from the data before recomputing the model.

13. The method of Claim 12, further including displaying the data to show indications of groups, trends, and outliers.

14. The method of Claim 10, wherein building the first matrix includes:
analyzing the preprocessed data to determine a liking/non-liking model;
including cross-validating the liking/non-liking model to determine a number of significant components; and
dividing liking/non-liking model into liker data and non-liker data based on the number of significant components.

15. The method of Claim 14, further includes computing an average value for each liker data and non-liker product and consumer response.

16. A system for predicting consumer behavior in selected products, comprising:
a first matrix module for providing a first matrix associated with N products evaluated by a plurality of consumers;
a second matrix module for providing a second matrix associated with the N products **characterized by** at least one of an analytical profile or an evaluation by a plurality of experts; and
a correlation module for correlating the first matrix to the second matrix to produce a relationship model.

17. The system of Claim 16, further comprising a display module for displaying a score plot of the relationship model.

18. The system of Claim 17, wherein the score plot includes a strength of association and correlation between the first matrix and the second matrix.

19. The system of Claim 16, further comprising a prediction module for predicting consumer responses for new products using the relationship model.

20. The system of Claim 19, further comprising a display module for displaying the predicted responses with a level of confidence.

21. The system of Claim 19, further comprising a display module for displaying a measure of reliability of the new products as **characterized by** the second matrix.

22. The system of Claim 16, further comprising:
a third matrix module for building a third matrix associated with the N products **characterized by** either an analytical profile or an evaluated by an expert sensory panel not chosen in the building the second matrix, wherein the correlation module correlates the first matrix to the third matrix to produce a relationship model.

23. The system of Claim 22, further comprising correlating any two matrices to each other.

24. The system of Claim 16, further comprising a preprocessing module, wherein each matrix is preprocessed by at least one preprocessing element to transform the data into a suitable form for analysis.

25. The system of Claim 24, wherein preprocessing elements include scaling of data, mean-centering, transformation and expansion, advanced scaling, and data correction and compression.

26. The system of Claim 24, wherein building the first matrix includes:
an analysis module for analyzing the preprocessed data using cross-validation to determine a number of significant components;
an inspection module for inspecting the number of significant components for outliers; and
an outlier module for removing the outliers from the number of significant components.

27. The system of Claim 26, further including a display module for displaying the data to show indications of groups, trends, and outliers.

28. The system of Claim 24, wherein building the first matrix includes:
a liking module for analyzing the preprocessed data to determine a liking/non-liking model;
a cross-validation module for cross-validating the liking/non-liking model to determine a number of significant components; and
a dividing module for dividing liking/non-liking model into liker data and non-liker data based on the number of significant components.

29. The system of Claim 28, wherein the dividing module further includes computing an average value for each liker data and non-liker data.

30. The system of Claim 16, further comprising compressing the first matrix to a dimensionality comparable to the dimensionality of the second matrix.

31. A method of predicting consumer behavior in selected products, comprising:
means for providing a first matrix associated with N products evaluated by a plurality of consumers;
means for providing a second matrix associated with the N products **characterized by** at least one of an analytical profile or an evaluation by a plurality of experts; and
means for correlating the first matrix to the second matrix to produce a relationship model.

32. A computer readable medium having prediction software stored thereon that when executed on a computing device correlates matrix data to produce a predicted relationship model, comprising:
correlating a first matrix to a second matrix to produce a relationship model; and
displaying a score plot of the relationship model.
